# EUROPÄISCHE PATENTSCHRIFT

(11) **EP 1 958 312 B1**
(45) Veröffentlichungstag und Bekanntmachung des Hinweises auf die Patenterteilung: **03.03.2010**
(21) Anmeldenummer: 06794000.7
(22) Anmeldetag: 09.10.2006
(51) Int. Cl.: H02K 5/24, H01R 39/38, H02K 5/14

(54) **BÜRSTENTRÄGER-BAUTEIL MIT MASSE-KONTAKTBLECH**
BRUSH MOUNT COMPONENT HAVING AN EARTH CONTACT PLATE
COMPOSANT PORTE-BALAIS AVEC TÔLE DE CONTACT DE MASSE

(30) Priorität: 30.11.2005 DE 102005057398
(43) Veröffentlichungstag der Anmeldung: 20.08.2008
(73) Patentinhaber: ROBERT BOSCH GMBH, 70442 Stuttgart (DE)
(72) Erfinder: GRIMM, Andreas, 76316 Malsch (DE); HEITZ, Robert, 76437 Rastatt (DE); MAERKLE, Jens, 77815 Buehl (DE); KUPERBERG, Ilya, 76149 Karlsruhe (DE)
(86) Internationale Anmeldenummer: PCT/EP2006/067198
(87) Internationale Veröffentlichungsnummer: WO 2007/062891

(56) Entgegenhaltungen:
- EP-A1- 1 528 656
- DE-A1- 19 804 369
- GB-A- 2 248 348

## Beschreibung

### Stand der Technik

Die Erfindung betrifft ein Bürstenträger-Bauteil mit einem Masse-Kontaktblech sowie ein Elektromotor beinhaltend ein solches, sowie ein Verfahren zum Herstellen eines solchen Elektromotors nach der Gattung der unabhängigen Ansprüche.

Mit der DE 100 10 439 A1 ist ein Stellantrieb mit einem Elektromotor bekannt geworden, bei dem die Welle des Elektromotors mit einem darauf angeordnetem Kommutator in einem Getriebegehäuse gelagert ist, das mit einem Poltopf verbunden ist. Zur elektrischen Kontaktierung des Kommutators weist der Stellantrieb einen Bürstenhalter mit in Köchern angeordneten Kohlebürsten auf wobei der Bürstenhalter vor dessen Montage lose mit einer Leiterplatte gekoppelt ist. Danach wird der Bürstenhalter zusammen mit der Leiterplatte in die untere Gehäuseschale eingesetzt und beispielsweise mittels Schrauben am Gehäuse befestigt Bei der Montage wird sowohl die Leiterplatte als auch der Bürstenhalter mittels Führungselemente gegenüber dem Gehäuse geführt. Aufgrund der losen Kopplung des Bürstenhalters mit der Leiterplatte vor dessen Montage sind elektrische Anschlussleitungen der auf dem Bürstenhalter angeordneten Bauelemente entsprechend flexibel ausgeführt. Wird nun das Getriebegehäuse aus Kunststoff, und nicht aus Metall ausgebildet, tritt durch das Bürstenfeuer elektromagnetische Störstrahlung auf, die sich störend auf die Elektronikeinheit des Elektromotors und dessen Umgebung auswirkt.

Die GB-2248348 zeigt einen Bürstenhalter nach dem Oberbegriff des Anspruchs 1, an dem Befestigungsplatten angeordnet sind. Diese dienen zur Befestigung und der elektrischen Masseanbinddung des Bürstenhalters im Gehäuse des Elektromotors.

Die EP-1528656 A1 offenbart einen Bürstenhalter, der auf einer Leiterplatte eines elektromotorischen Stellantriebs befestigt ist. Zur Erdung des Gehäuses des Stellantriebs ist ein Massekontakt in eine Aussparung des Bürstenhalters eingebracht, die eine elektrische Kontaktierung der Leiterplatte mit dem Gehäuse bildet.

### Offenbarung der Erfindung

Das erfindungsgemäße Bürstenträger-Bauteil, beziehungsweise der Elektromotor und dessen Herstellungsverfahren mit den kennzeichnenden Merkmalen der unabhängigen Ansprüche haben den Vorteil, dass durch die Anordnung des Masse-Kontaktblechs auf den Bürstenträger-Bauteil die Kohlebürsten effizient abgeschirmt werden, um elektromagnetische Störstrahlung zu unterdrücken. Durch die symmetrische Gestaltung des Masse-Kontaktblechs mit seinen Federzungen und Pins entsprechend der räumlichen Anordnung der Kohlebürsten, kann die durch das Bürstenfeuer erzeugte elektromagnetische Störstrahlung über den gesamten Raumbereich sehr wirkungsvoll unterbunden werden. Durch die Befestigung des Masse-Kontaktblechs auf dem Bürstenträger-Bauteil entfällt ein zusätzlicher Montageprozess für deas Masse-Kontaktblech.

Durch die in den Unteransprüchen ausgeführten Maßnahmen ergeben sich vorteilhafte Weiterbildungen und Verbesserungen der in den unabhängigen Ansprüchen angegebenen Merkmale. Eine besonders wirkungsvolle elektromagnetische Abschirmung wird erzielt, wenn das Masse-Kontaktblech eine quer zur Ankerwelle sich erstreckende axiale Stirnfläche aufweist, an die sich - quasi um die Federhebel herum - jeweils seitlich Schenkelseiten erstrecken, die näherungsweise einen rechten Winkel mit der axialen Stirnfläche bilden. Eine solche Ausformung des Masse-Kontaktblechs eignet sich besonders, um in Kombination mit dem Abschirmblech des Getriebegehäuses, der Leiterplatte und dem Poltopf zusammen einen geschlossenen metallenen Abschirmkäfig um die Bürstenanordnung zu bilden.

Um einen guten elektrischen Kontakt zwischen dem Masse-Kontaktblech und dem Abschirmblech des Gehäuses herzustellen, weisen beide Schenkelseiten laschenförmige Federkontakte auf, die in montiertem Zustand großflächig am Abschirmblech anliegen. Dadurch wird das Nlasse-Kontaktblech besonders wirkungsvoll auf Massepotential gebracht.

Sind am Masse-Kontaktblech Pins angeformt, die durch entsprechende Öffnungen in der Bodenfläche des Bürstenträger-Bauteils hindurchgreifen, können diese sehr einfach mit einer parallel zur Bodenfläche angeordneten Leiterplatte verbunden werden, um auf der Leiterplatte einen Massekontakt herzustellen.

Von Vorteil ist es, wenn das Masse-Kontaktblech direkt - ohne Verwendung weiterer Verbindungsmittel - in das Bürstenträger-Bauteil eingeschoben werden kann, um mit diesem einen Formschluss zu bilden. Dadurch entfällt ein zusätzlicher Montageschritt zur Befestigung des Masse-Kontaktblechs.

Besonders günstig ist es, wenn die Kohlenbürsten als Hammerbürsten mit einem Federhebel ausgebildet sind, an dem ein Klemmelement angeformt ist. Durch das Festklemmen der Hammerbürsten in entsprechenden Aufnahmen des Bürstenträger-Bauteils entfällt ebenfalls ein zusätzlicher Montageprozess für die Befestigung und Justage der Hammerbürsten.

Dient das Bürstenträger-Bauteil außer zur Lagerung der Kohlebürsten und des Masse-Kontaktblechs zusätzlich zur Aufnahme weiterer Bauteile, wie beispielsweise Entstördrosseln, kann dieser Systemträger als separate Baugruppe vormontiert werden, wodurch eine flexiblere Fertigung ermöglicht wird.

Beim erfindungsgemäßen Elektromotor ist das Bürstenträger-Bauteil vorteilhaft auf einer Leiterplatte angeordnet, die sich näherungsweise parallel zur Bodenfläche des Bürstenträger-Bauteils und tangential zum Kommutator erstreckt. Dadurch wird eine direkte, kurze und symmetrische elektrische Verbindung zwischen dem Masse-Kontaktblech und der Leiterplatte ermöglicht, wodurch die Leiterplatte zur Unterdrückung der elektromagnetischen Störstrahlung beiträgt.

Indem das Masse-Kontaktblech und die weiteren, auf dem Bürstenträger-Bauteil angeordneten Bauelemente mit ihren Pins durch entsprechende Öffnungen der Bodenfläche in Bohrungen der Leiterplatte eingreifen, können die Pins mittels einem standardisierten Lötverfahren in einfacher Weise mit der Leiterplatte kontaktiert werden. Beispielsweise kann die Leiterplatte auch in einem separaten, automatisierten Fertigungsprozess hergestellt werden, beispielsweise mittels THRS-Verfahren.

In einer alternativen Ausführung kann das Masse-Kontaktblech auch zweiteilig ausgebildet sein, wobei die beiden Teile im wesentlichen aus großflächigen Feder-Kontaktzungen gebildet sind. Durch die symmetrische Anordnung der beiden separaten Kontaktzungen zur Anordnung der Kohlebürsten (32) kann das Abschirmblech das Bürstenfeuer optimal abschirmen.

Alternativ zur Befestigung des Masse-Kontaktblechs am Bürstenträger-Bauteil, kann das ein- oder zweiteilige Masse-Kontaktblech auch direkt an der Leiterplatte befestigt werden. Hierzu kontaktieren die Pins der Federzungen die Leiterplatte in unmittelbarer Nähe zur elektrischen Kontaktierung der Kohlebürsten.

Durch die symmetrische Ausformung des Abschirmblechs im Getriebegehäuse bezüglich der Kohlebürsten, beziehungsweise der Ankerwelle, kann die elektromagnetische Störstrahlung besonders effektiv abgeschirmt werden. Die Kombination des symmetrischen Abschirmblechs mit dem symmetrischen Masse-Kontaktblech bewirkt eine vorteilhafte Ausformung des metallenen Abschirmkäfigs um die Kohlebürsten herum.

Das Abschirmblech kann auf sehr einfache Weise mittels axialer Fortsätze an den Poltopf angebunden werden, wodurch die axialen Fortsätze als Masseanschlüsse für das Abschirmblech dienen. Die Masseanschlüsse können beispielsweise in einem Prozess beim Verbinden des Poltopfs mit dem Getriebegehäuse mit dem Poltopf kontaktiert werden. Besonders kostengünstig ist hierbei die plastische Umformung von Verstemmlaschen am Flansch des Poltopfs. Durch die symmetrische Anordnung der beispielsweise zwei oder drei Masseanschlüsse bezüglich der Kohlenbürstenanordnung kann wiederum eine Reduzierung der Störstrahlung erzielt werden.

Für die Herstellung eines robusten elektrischen Kontakts bei der Montage des Bürstenträger-Bauteils sind an dem Abschirmblech großflächige, ebene Anlageflächen ausgebildet, an die die Federzungen angepresst werden.

Der Abschirmkäfig, der sich aus dem Abschirmblech, dem Masse-Kontaktblech und der Masselage der Leiterplatte zusammen setzt, erstreckt sich vorteilhaft über die gesamte axiale Breite der Kohlebürsten, um diese wirksam abzuschirmen.

Beim erfindungsgemäßen Herstellungsverfahren des Elektromotors kann das Masse-Kontaktblech sehr einfach auf das Bürstenträger-Bauteil vormontiert und elektrisch mit der Leiterplatte verbunden werden. Dabei entfällt ein zusätzlicher Arbeitsschritt für die mechanische Befestigung des Masse-Kontaktblechs. Mit der Montage der Kohlebürsten auf den Kommutator werden gleichzeitig zuverlässige elektrische Kontakte zwischen dem Masse-Kontaktblech und dem Abschirmblech hergestellt, wodurch ohne zusätzlichen Montageaufwand ein wirksamer Abschirmkäfig für die Kohlebürsten hergestellt wird.

Vorteilhafter Weise kann das Masse-Kontaktblech zusammen mit den andere Bauteilen in einem Arbeitsgang mit der Leiterplatte verlötet werden, wodurch zusätzlich zu elektrischen Verbindung auch eine mechanisch starre Verbindung zwischen dem Bürstenträger-Bauteil und der Leiterplatte erzeugt wird.

### Zeichnungen

In den Zeichnungen sind verschiedene Ausführungsbeispiele einer erfindungsgemäßen Vorrichtung dargestellt und in der nachfolgenden Beschreibung näher erläutert. Es zeigen:
- Figur 1: ein Ausführungsbeispiel eines erfindungsgemäßen Elektromotors,
- Figur 2: eine vergrößerte Darstellung des Bürstenträger-Bauteils aus Figur 1,
- Figur 3: ein auf einer Leiterplatte vormontiertes Bürstenträger-Bauteil gemäß Figur 2,
- Figur 4: ein unmontiertes Masse-Kontaktblech,
- Figur 5: schematisch einen Schnitt durch eine Anordnung gemäß Figur 1, und
- Figur 6: eine Darstellung eines weiteren Ausführungsbeispiels.

### Beschreibung

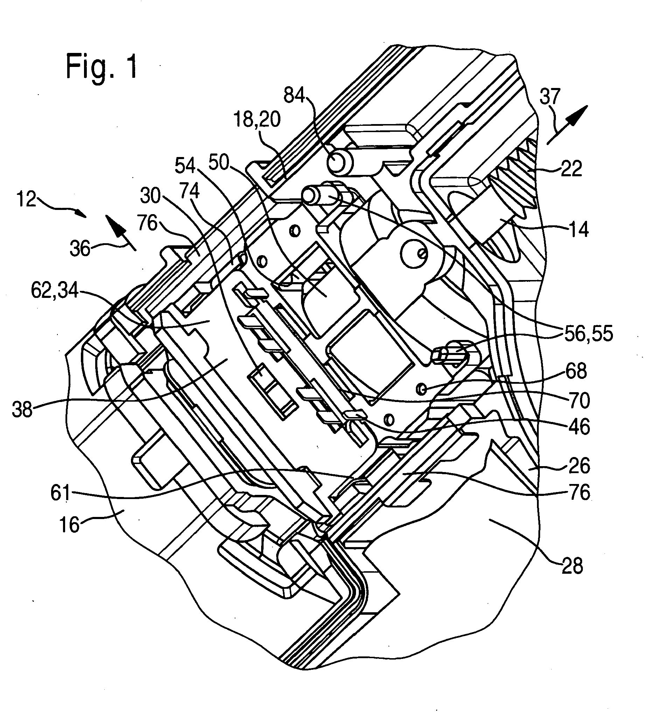

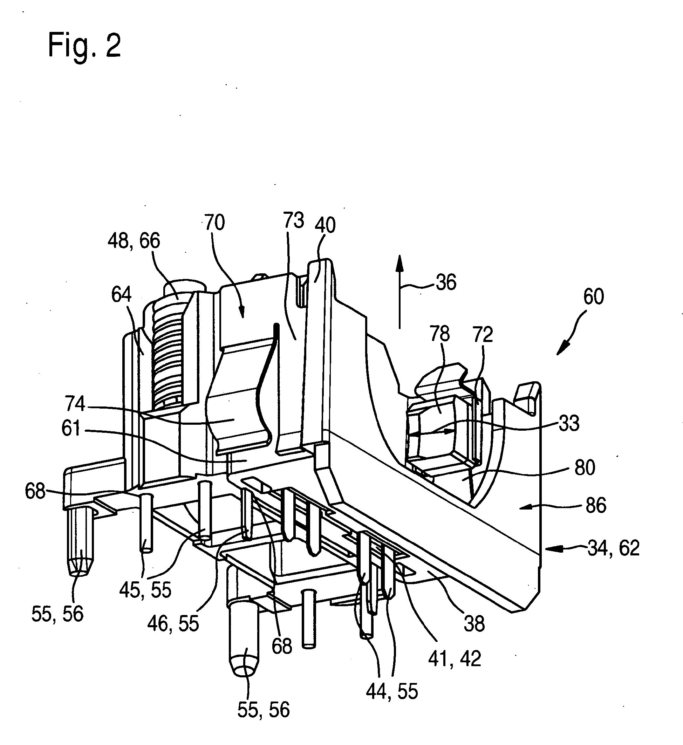

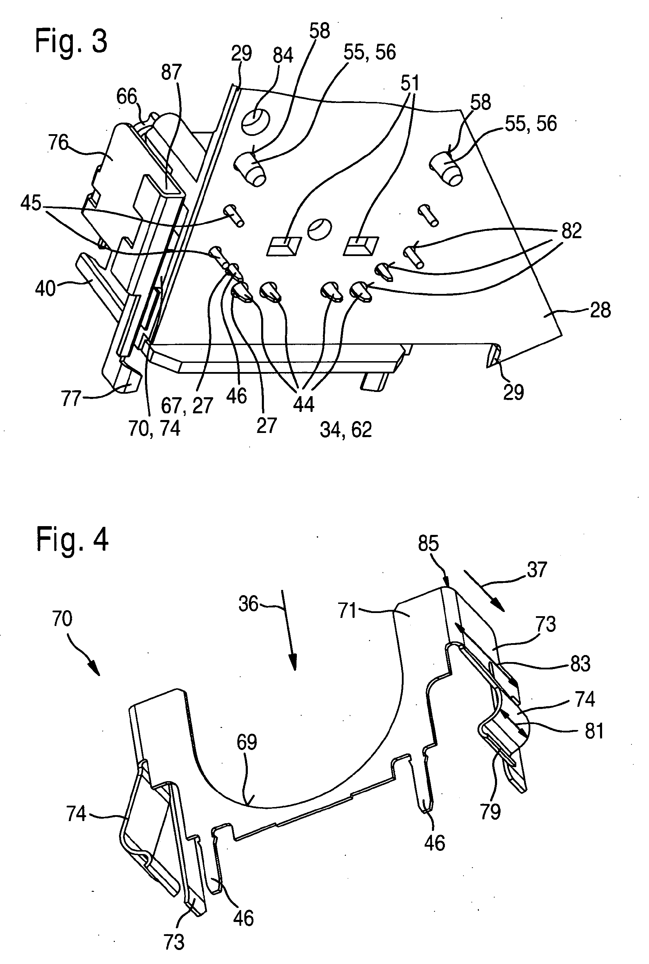

In Figur 1 ist ein Ausschnitt eines erfindungsgemäßen Elektromotors 12 dargestellt, bei dem sich eine Ankerwelle 14 aus einem Polgehäuse 16 heraus in ein mit diesem verbundenen Getriebegehäuse 18 hinein erstreckt. Das Getriebegehäuse 18 weist ein erstes schalenförmiges Gehäuseteil 20 auf, das nach der Montage des Elektromotors 12 und eines nicht näherer dargestellten Getriebes 22 mit einem Gehäusedeckel verschlossen wird. Der Elektromotor 12 weist des Weiteren ein Elektronikgehäuse 26 auf, das beispielsweise einstückig mit der unteren Gehäuseschale 20 ausgebildet ist und eine Leiterplatte 28 aufnimmt. Auf der Ankerwelle 14 ist ein Kommutator 30 angeordnet, der über als Hammerbürsten ausgebildete Kohlebürsten 32 mit Strom versorgt wird. Die Kohlebürsten 32 sind in ein separates Bürstenträger-Bauteil 34 eingeklemmt, das vergrößert in Figur 2 dargestellt ist. Das Bürstenträger-Bauteil 34 ist als U-förmiges Kunststoffteil ausgebildet und ist in radialer Richtung 36 zur Ankerwelle 14 montierbar. In einer Bodenfläche 38 des Bürstenträger-Bauteils 34, die zwischen zwei Schenkeln 40 des Bürstenträger-Bauteils 34 angeordnet ist, ist als Durchbruch 41 ein Schlitz 42 ausgeformt, durch den Kontaktpins 44 der Kohlebürsten 32 hindurch greifen. Diese Kontaktpins 44 sind zusammen mit Pins 46 eines Masse-Kontaktblechs 70, das ebenfalls auf dem Bürstenträger-Bauteil 34 angeordnet ist, elektrisch mit der Leiterplatte 28 verbunden (siehe Figur 3). In Figur 1 ist die Leiterplatte 28, die sich näherungsweise parallel zur Ankerwelle 14 und zum Gehäusedeckel erstreckt, abgeschnitten, um die Sicht auf das Bürstenträger-Bauteil 34 frei zu geben. Axial benachbart zum Kommutator 30 ist auf der Ankerwelle 14 ein Ringmagnet 50 angeordnet, der mit entsprechenden Hall-Sensoren 51 zusammen wirkt, die durch entsprechende Öffnungen 54 im Bürstenträger-Bauteil 34 hindurch greifen. Zur Justierung des Bürstenträger-Bauteils 34 gegenüber der Leiterplatte 28 sind an der Bodenfläche 38 als Befestigungselemente 55 Zentrierstifte 56 angeformt, die in entsprechende Zentrieröffnungen 58 der Leiterplatte 28 eingreifen. Das Bürstenträger-Bauteil 34 bildet hierbei einen U-förmigen Käfig 60, der die Hammerbürsten 32 gegenüber dem Getriebe 22 und dem Elektronikgehäuse 26 abtrennt, um beispielsweise deren Verschmutzung durch Kohlestaub zu verhindern.

In Figur 2 ist das Bürstenträger-Bauteil 34 als Systemträger 62 für eine vormontierte Baugruppe dargestellt, das zusätzlich zu den Hammerbürsten 32 weitere Bauelemente 48 aufnimmt. Hierzu weist das Bürstenträger-Bauteil 34 hülsenförmige Aufnahmen 64 auf, in der Entstördrosseln 66 angeordnet sind, die mit ihren Pins 45 durch entsprechende Löcher 68 in der Bodenfläche 38 hindurch greifen. Des Weiteren ist auf dem Bürstenträger-Bauteil 34 das Masse-Kontaktblech 70 gelagert, das die Hammerbürsten 32 U-förmig umschließt, um die durch das Bürstenfeuer entstehende elektromagnetische Störstrahlung abzuschirmen. Das Masse-Kontaktblech 70 liegt dabei mit einer axialen Stirnfläche 71 und zwei abgewinkelten Schenkelflächen 73 formschlüssig an entsprechenden Käfigwänden 61 des Bürstenträger-Bauteils 34 an. Das Masse-Kontaktblech 70 weist Pins 46 auf, die durch Löcher 68 in der Bodenfläche 38 hindurch greifen, um die elektrische Verbindung mit der Leiterplatte 28 herzustellen. Dabei sind die Löcher 68 und der Durchbruch 41 deckungsgleich angeordnet zu Bohrungen 82, die in der sich entlang der Bodenfläche 38 erstreckenden Leiterplatte 28 ausgeformt sind. Entlang den beiden Schenkeln 40 weist das Masse-Kontaktblech 70 zwei großflächige Federzungen 74 auf, die nach der Montage im Getriebegehäuse 18 federnd an gegenüberliegenden Anlageflächen 75 eines Abschirmblechs 76 anliegen, das wiederum mit dem Polgehäuse 16 kontaktiert ist. Die Hammerbürsten 32 weisen Kohlen 78 auf, die an einem Ende eines Federhebels 80 befestigt sind. Beispielsweise werden die Kohlen 78 mittels Laserschweißen befestigt, oder in eine angeformte Kohlenaufnahme 79 des Federhebels 80 eingepresst. Am anderen Ende des Federhebels 80 sind die Kontaktpins 44 angeordnet, die durch den Schlitz 42 in der Bodenfläche 38 greifen.

In Figur 3 ist das Bürstenträger-Bauteil 34 als vormontierter Systemträger 62 auf der Leiterplatte 28 angeordnet. Die Leiterplatte 28 weist eine Vielzahl von Bohrungen 82 auf, in die die Pins 46 des Masse-Kontaktblechs 70, die Kontaktpins 44 der Kohlebürsten 32 und die Pins 45 der weiteren Bauelemente 48 eingreifen. Beispielsweise sind hier die vier Pins 45 der beiden Entstördrosseln 66 dargestellt. Nachdem das Bürstenträger-Bauteil 34 mit seinen Zentrierstiften 56 formschlüssig in die entsprechenden Zentrieröffnungen 58 der Leiterplatte 28 eingefügt ist, werden die Pins 44, 45 und 46 mittels dem sogenannten THRS-Verfahren mit der Leiterplatte 28 verlötet. Hierbei werden die Öffnungen 82 der Leiterplatte 28 mit Lötpaste 27 gefüllt, die Bauelemente 48, 32 mit ihren Pins 46, 45, 44 in die Öffnungen 82 eingeführt, und dann zum Aushärten der Lötpaste 27 erwärmtbeispielsweise in einem Ofen. Ein solches automatisches Lötverfahren ist sehr kostengünstig und sehr flexibel bezüglich der Anordnung der Bauelemente 48 auf der Leiterplatte 28. Somit stellen die Pins 44, 45, 46 zusammen mit der Lötpaste 27 ebenfalls Befestigungsmittel 55 für eine mechanisch starre Verbindung des Bürstenträger-Bauteils 34 mit der Leiterplatte 28 dar. Nachdem das Bürstenträger-Bauteil 34 somit mechanisch und elektrisch mit der Leiterplatte 28 starr verbunden ist, wird die Leiterplatte 28 mit dem Bürstenträger-Bauteil 34 radial auf die im Getriebegehäuse 18 angeordnete Ankerwelle 14 montiert. Dabei wird die Leiterplatte 28 wiederum mittels Zentrierelementen 84 gegenüber dem Getriebegehäuse 18 justiert. Nach der Montage des vormontierten Systemträgers 62 in radialer Richtung 36, liegen die Federzungen 74 des Masse-Kontakblechs 70 an dem zuvor im Getriebegehäuse 18 montierten Abschirmblech 76 an.

In Figur 4 ist ein Masse-Kontaktblech 70 in unmontiertem Zustand abgebildet. Die axiale Stirnwand 71 des Masse-Kontaktblechs 70 ist U-förmig ausgebildet und weist eine Aussparung 69 für die Ankerwelle 14 auf. An der axialen Stirnwand 71 sind einstückig die beiden Pins 46 symmetrisch zur Ankerwelle 14 angeformt. Die beiden Schenkelseiten 73 sind dabei näherungsweise rechtwinklig zur axialen Stirnwand 71 angeordnet, wobei das gesamte Masse-Kontaktblech 70 als ein einstückiges Biege-Stanzteil ausgebildet ist. An den Schenkelseiten 73 sind großflächige Kontaktzungen 74 ausgebildet, die von der Ankerwelle 14 aus gesehen, radial nach außen gewölbt sind. Die Kontaktzungen 74 weisen ein freies Ende 79 auf, das nochmals in entgegen gesetzter Richtung gewölbt ist, sodass die S-förmige Kontaktzunge 74 bei der Montage des Bürstenträger-Bauteils 34 eine Federkraft gegen das Abschirmblech 76 ausübt. Die axiale Breite 81 der Federzungen 74 erstreckt sich im Ausführungsbeispiel mindestens über die halbe axiale Breite 83 des Masse-Kontaktblechs 70, damit eine große Kontaktfläche zur gegenüber liegenden Änlagefläche 75 entsteht. Zur Vormontage des Masse-Kontaktblechs 70 wird dieses in radialer Richtung 36 in das Bürstenträger-Bauteil 34 eingesteckt, wobei die Pins 46 durch Öffnungen 68 in der Bodenfläche 38 hindurch treten. Die axiale Stirnwand 71 bildet einen Winkel mit der Schenkelseite 73, wobei dieser Winkel 85 an den entsprechenden Käfigwänden 61 des Bürstenträger-Bauteils 34 formschlüssig anliegt.

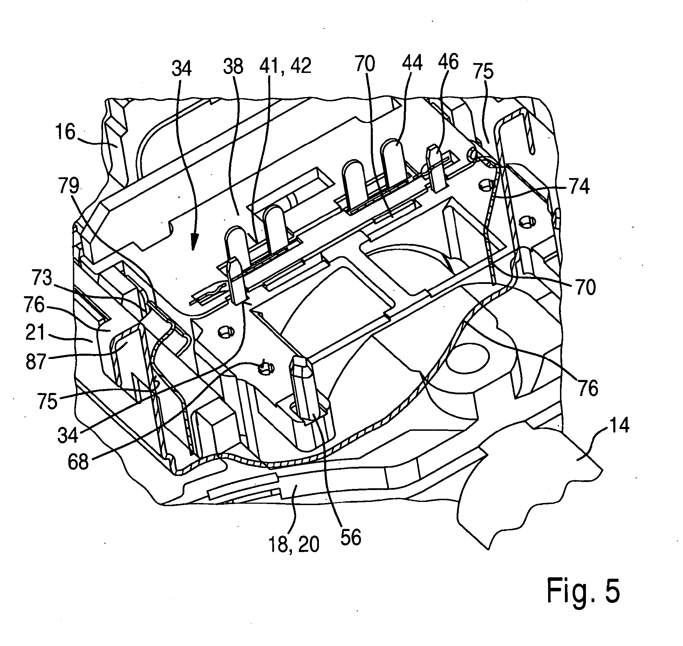

In Figur 5 ist das Bürstenträger-Bauteil 34 mit vormontiertem Masse-Kontaktblech 70 innerhalb des Getriebegehäuses 18 dargestellt. Dabei ist der vormontierte Systemträger 62 in Figur 2 um 180° gedreht und entsprechend Richtung 36 in die Gehäuseschale 20 eingesetzt. Zur Verdeutlichung sind in der Ansicht nur das Abschirmblech 76 und das Masse-Kontaktblech 70 zusätzlich im Schnitt dargestellt. Das Getriebegehäuse 18 ist als schalenförmiges Gehäuseteil 20 ausgebildet, das mit dem Polgehäuse 16 verbunden ist. Das U-förmig ausgebildete Abschirmblech 76 wurde vor der Montage des Bürstenträger-Bauteils 34 in das Gehäuseteil 20 eingelegt. Dabei umgreifen Nuten 87 an den freien Enden des Abschirmblechs 76 die Seitenwände 21 des Gehäuseteils 20, um das Abschirmblech 76 gegenüber dem Gehäuseteil 20 zu fixieren. In montiertem Zustand liegen die S-förmigen Federzungen 74 unter Federkraft an den Anlageflächen 75 des Abschirmblechs 76 an. Dabei stützt sich das freie Ende 79 der Federzunge 74 am Bürstenträger-Bauteil 34 ab, um eine Federkraft zu erzeugen. Dabei bildet das symmetrisch ausgebildete Masse-Kontaktblech 70 zusammen mit dem symmetrisch ausgebildeten Abschirmblech 76 einen metallenen Abschirmkäfig, der sich zumindest über die axiale Breite 33 der Kohlen 78 erstreckt. Aus Gründen der Übersichtlichkeit ist die Leiterplatte 28 in Figur 5 nicht dargestellt, deren-Masselage 29 zusammen mit dem Masse-Kontaktblech 70 und dem Abschirmblech 76 den metallenen Abschirmkäfig über den gesamten Umfang des Kommutators 30 schließt.

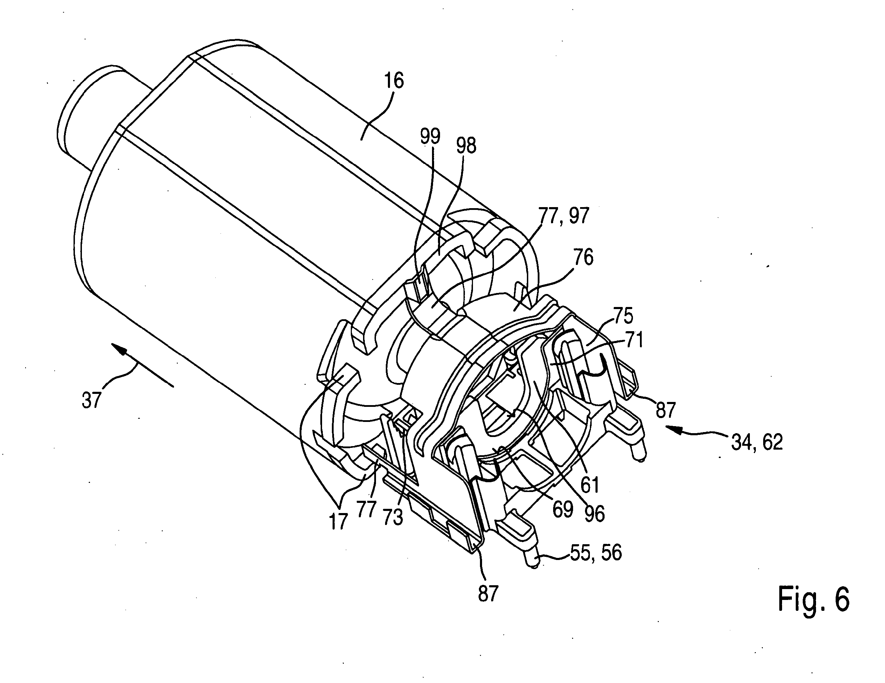

Figur 6 zeigt schematisch ein weiteres Ausführungsbeispiel, mit einem Polgehäuse 16, aber ohne Getriebegehäuse 18. Das Polgehäuse 16 weist an seinem offenen Rand Verstemmlaschen 17 auf, die zur Verbindung mit dem Getriebegehäuse 18 plastisch umgeformt werden. Die Masseanschlüsse 77 des Abschirmblechs 76 erstrecken sich hierbei in axialer Richtung 37 bis zu den Verstemmlaschen 17, sodass beim Verbindungsprozess des Polgehäuses 16 mit dem Getriebegehäuse 18 gleichzeitig die Masseanschlüsse 77 mit dem Poltopf 16 kontaktiert werden. Dadurch liegt das Massepotential des Poltopfs 16 über das Abschirmblech 76 am Masse-Kontaktblech 70 an, und über die Pins 46 ebenfalls an dem Massekontakt 67 der (nicht dargestellten) Leiterplatte 28. Am Abschirmblech 76 ist ein dritter Masseanschluss 97 ausgebildet, der mittig zu den beiden anderen Masseanschlüssen 77 und daher ebenfalls symmetrisch angeordnet ist. Der Masseanschluss 97 liegt mit seinem freien Ende 99 an einem Flansch 98 des Poltopfs 16 an und wird beim Verbinden mit dem Getriebegehäuse 18 an diesen angepresst, um einen Massekontakt herzustellen.

Es sei angemerkt, dass hinsichtlich der in den Figuren gezeigten Ausführungsbeispiele und der Beschreibung vielfältige Kombinationsmöglichkeiten der einzelnen Merkmale untereinander möglich sind. So kann beispielsweise die konkrete Ausgestaltung und Befestigungsweise des Bürstenträger-Bauteils 34, des Masse-Kontaktblechs 70, sowie des korrespondierenden Abschirmblechs 76 entsprechend variiert werden. Beispielsweise kann das Masse-Kontaktblech 70 als zwei Feder-Kontaktzungen 74 ausgebildet werden, die in unmittelbarer Nähe zum Bürstenhalter-Bauteil 34 direkt auf der Leiterplatte 28 angeordnet sind. Ebenfalls können die Verbindungsmittel zwischen dem Bürstenträger-Bauteil 34, beziehungsweise den Pins 46, 45, 44 und der Leiterplatte 28 entsprechend angepasst werden. Das Bürstenträger-Bauteil 34 ist vorzugsweise als Systemträger 62 für eine vormontierte Baugruppe ausgebildet, die vor dessen radialer Montage in das Gehäuseteil 20 mechanisch fest mit der Leiterplatte 28 verbunden wird. Der erfindungsgemäße Elektromotor 12 wird insbesondere für Fensterheber, Schiebedächer oder für andere Komfortfunktionen im Kraftfahrzeug verwendet.

## Patentansprüche

1. Bürstenträger-Bauteit (34) aufweisend Kohlebürsten (32) zur Positionierung der Kohlebürsten (32) gegenüber einem Kommutator (30) eines Elektromotors (12), mit mindestens einem Befestigungsmittel (55) zur Fixierung des Bürstenträger-Bauteils (34) auf einer Leiterplatte (28),
wobei an dem Bürstenträger-Bauteil (34) ein Masse-Kontaktblech (70) angeordnet ist, das symmetrisch zur Anordnung der Kohlebürsten (32) ausgebildet ist, **dadurch gekennzeichnet, dass** das Masse-Kontaktblech (70) eine axiale Stirnwand (71) mit einer Aussparung (69) für eine Ankerwelle (14) und zwei abgewinkelte Schenkelseiten (73) aufweist, die zusammen die Kohlebürsten (32) umschließen.

2. Bürstenträger-Bauteil (34) nach Anspruch 1, **dadurch gekennzeichnet, dass** an beiden gegenüberliegenden Schenkelseiten (73) jeweils eine Federzunge (74) als Kontaktelement angeformt ist.

3. Bürstenträger-Bauteil (34) nach einem der vorhergehenden Ansprüche,
**dadurch gekennzeichnet, dass** das Masse-Kontaktblech (70) Pins (46) zur elektrischen Kontaktierung der Leiterplatte (28) aufweist, die durch ein Loch (68) in einer Bodenfläche (38) des Bürstenhalter-Bauteils (34) greifen.

4. Bürstenträger-Bauteil (34) nach einem der vorhergehenden Ansprüche,
**dadurch gekennzeichnet, dass** das Masse-Kontaktblech (70) formschlüssig direkt in das Bürstenträger-Bauteil (34) einsteckbar ist.

5. Bürstenträger-Bauteil (34) nach einem der vorhergehenden Ansprüche,
**dadurch gekennzeichnet, das** die Kohlebürsten (32) als Hammerbürsten mit an Federhebeln (80) angeordneten Klemmelementen (88) ausgebildet sind, die in Bürstenaufnahmen (86) des Bürstenträger-Bauteils (34) einsteckbar sind.

6. Bürstenträger-Bauteil (34) nach einem der vorhergehenden Ansprüche, **gekennzeichnet, durch** die Verwendung als Systemträger (62) für weitere Bauelemente (48), wie insbesondere Entstördrosseln (66).

7. Elektromotor (12) mit einem Bürstenträger-Bauteil (34) nach einem der vorhergehenden Ansprüche, **dadurch gekennzeichnet, dass** eine Leiterplatte (28) entlang der Bodenfläche (38) und tangential zum Kommutator (30) angeordnet ist, und das Bürstenhalter-Bauteil (34) und das Masse-Kontaktblech (70) elektrisch und mechanisch fest mit der Leiterplatte (28) verbunden sind.

8. Elektromotor (12) mit einem Bürstenträger-Bauteil (34) nach einem der vorhergehenden Ansprüche, **dadurch gekennzeichnet, dass** die Pins (46) des Masse-Kontaktblechs (70) - und insbesondere Pins (45) von weiteren Bauteilen (48) wie Entstördrosseln (66) uns/oder Hammerbürsten (32) - durch Löcher (68, 41, 42) der Bodenfläche (38) des Bürstenträger-Bauteils (34) in entsprechende Bohrungen (82) in der Leiterplatte (28) greifen, um an dieser einen elektrisch Massekontakt (67) herzustellen.

9. Elektromotor (12) **mit einem Bürstenträger-Bauteil** (34) nach einem der vorhergehenden Ansprüche, **dadurch gekennzeichnet, dass** die das Masse-Kontaktblech (70) aus zwei gleichen, separaten Teilen - insbesondere Federzungen (74) - gebildet ist, die symmetrisch zur Anbindung der Kohlebürsten (32) angeordnet sind.

10. Elektromotor (12) **mit einem Bürstenträger-Bauteil (34)** nach einem der vorhergehenden Ansprüche, **dadurch gekennzeichnet, dass** an den Federzungen (74) die Pins (46) angeformt sind, die möglichst nahe bei den Pins (44) der Kohlebürsten (32) mit der Leiterplatte (28) verbunden sind.

11. Elektromotor (12) **mit einem Bürstenträger-Bauteil (34)** nach einem der vorhergehenden Ansprüche, **dadurch gekennzeichnet, dass** der Elektromotor (12) einen Poltopf (16) und ein daran befestigtes Getriebegehäuse (18) aufweist und im Getriebegehäuse (18) ein Abschirmblech (76) angeordnet ist, das symmetrisch zur Anordnung der Kohlebürsten (32) ausgebildet ist.

12. Elektromotor (12) **mit einem Bürstenträger-Bauteil (34)** nach einem der vorhergehenden Ansprüche, **dadurch gekennzeichnet, dass** das Abschirmblech (76) mindestens zwei - vorzugsweise drei - symmetrische Masseanschlüsse (77) aufweist, die am Poltopf (16) befestigt sind - insbesondere mittels plastischer Verformung des Poltopfs (16).

13. Elektromotor (12) **mit einem Bürstenträger-Bauteil (34)** nach einem der vorhergehenden Ansprüche, **dadurch gekennzeichnet, dass** das Abschirmblech (76) zwei sich einander gegenüberliegende Anlageflächen (75) aufweist, an denen die Federzungen (74) in montiertem Zustand unter Federkraft anliegen.

14. Elektromotor (12) **mit einem Bürstenträger-Bauteil (34)** nach einem der vorhergehenden Ansprüche, **dadurch gekennzeichnet, dass** das Abschirmblech (76) U-förmig ausgebildet ist und zusammen mit dem Masse-Kontaktblech (70) und einer Masselage (29) der Leiterplatte (28) eine über den gesamten Umfang geschlossene Metall-Abschirmung bildet, die sich insbesondere mindestens über die axiale Breite (33) der Kohlebürsten (32) erstreckt.

15. Verfahren zum Herstellen eines Elektromotors (12) nach einem der Ansprüche 7 bis 14 **mit einem Bürstenträger-Bauteil (34)** nach einem der Ansprüche 1 bis 6, bei dem eine Ankerwelle (14) mit einem Kommutator (30) und das Bürstenträger-Bauteil (34) von einem Gehäuseteil (18, 20) aufgenommen werden, **gekennzeichnet durch** folgende Montageschritte:
- ein Abschirmblech (76) wird radial in das Gehäuseteil (20) eingelegt und symmetrisch mit einem Polgehäuse (16) verbunden
- die Ankerwelle (14) mit dem darauf gelagerten Kommutator (30) wird in das Gehäuseteil (20) eingesetzt
- ein Masse-Kontaktblech (70) wird auf das Bürstenträger-Bauteil (34) aufgesteckt
- das Masse-Kontaktblech (70) wird elektrisch mit der Leiterplatte (28) kontaktiert und das Bürstenträger-Bauteil (34) mechanisch mit einer Leiterplatte (28) verbunden
- die Leiterplatte (28) mit dem Bürstenträger-Bauteil (34) wird in radialer Richtung (36) in das Gehäuseteil (20) montiert, wobei das Masse-Kontaktblech (70) mit symmetrisch **zur Ankerwelle (14)** angeordneten Federzungen (74) an korrespondierenden Anlageflächen (75) des Abschirmblechs (76) angepresst wird
- ein Gehäusedeckel wird radial auf das Gehäuseteil (20) gefügt.

16. Verfahren nach Anspruch **15, dadurch gekennzeichnet, dass** Pins (46) des Masse-Kontaktblechs (70) vor der Montage der Leiterplatte (28) mit dieser verlötet werden - insbesondere in einem Arbeitsgang mit dem Anlöten von im Bürstenträger-Bauteil (34) angeordneten Entstördrosseln (66) und/oder Kohlebürsten (32).

## Claims

1. Brush mount component (34) having carbon brushes (32), for positioning the carbon brushes (32) with respect to a commutator (30) of an electric motor (12), having at least one fastening means (55) for fixing the brush mount component (34) on a printed circuit board (28), with an earth contact plate (70) being arranged on the brush mount component (34) and being designed in a symmetrical manner for arranging the carbon brushes (32), **characterized in that** the earth contact plate (70) has an axial end wall (71) with a cutout (69) for an armature shaft (14) and two angled limb sides (73) which together surround the carbon brushes (32).

2. Brush mount component (34) according to Claim 1, **characterized in that** a spring tongue (74) is integrally formed, as a contact element, on each of the two opposite limb sides (73).

3. Brush mount component (34) according to either of the preceding claims, **characterized in that** the earth contact plate (70) has pins (46) for making electrical contact with the printed circuit board (28), the said pins engaging through a hole (68) in a base surface (38) of the brush mount component (34).

4. Brush mount component (34) according to one of the preceding claims, **characterized in that** the earth contact plate (70) can be inserted directly into the brush mount component (34) in an interlocking manner.

5. Brush mount component (34) according to one of the preceding claims, **characterized in that** the carbon brushes (32) are in the form of hammer brushes with clamping elements (88) which are arranged on spring levers (80), it being possible to insert the said clamping elements (88) into brush holders (86) of the brush mount component (34).

6. Brush mount component (34) according to one of the preceding claims, **characterized by** the use as a system mount (62) for further structural elements (48), such as interference-suppression coils (66) in particular.

7. Electric motor (12) having a brush mount component (34) according to one of the preceding claims, **characterized in that** a printed circuit board (28) is arranged along the base surface (38) and tangentially to the commutator (30), and the brush mount component (34) and the earth contact plate (70) are electrically and mechanically connected to the printed circuit board (28) in a fixed manner.

8. Electric motor (12) having a brush mount component (34) according to one of the preceding claims, **characterized in that** the pins (46) of the earth contact plate (70) - and in particular pins (45) of further components (48) such as interference-suppression coils (66) and/or hammer brushes (32) - extend through holes (68, 41, 42) in the base surface (38) of the brush mount component (34) into corresponding bores (82) in the printed circuit board (28) in order to establish an electrical earth contact (67) to the said printed circuit board.

9. Electric motor (12) having a brush mount component (34) according to one of the preceding claims,
**characterized in that** the earth contact plate (70) is formed from two identical, separate parts - in particular spring tongues (74) - which are arranged in a symmetrical manner for connecting the carbon brushes (32).

10. Electric motor (12) having a brush mount component (34) according to one of the preceding claims, **characterized in that** the pins (46) are integrally formed on the spring tongues (74) and are connected to the printed circuit board (28) as close as possible to the pins (44) of the carbon brushes (32).

11. Electric motor (12) having a brush mount component (34) according to one of the preceding claims, **characterized in that** the electric motor (12) has a pole pot (16) and a gear mechanism housing (18) which is fastened to the said pole pot, and a screening plate (76) is arranged in the gear mechanism housing (18) and is designed in a symmetrical manner for arranging the carbon brushes (32).

12. Electric motor (12) having a brush mount component (34) according to one of the preceding claims, **characterized in that** the screening plate (76) has at least two - preferably three - symmetrical earth connections (77) which are fastened to the pole pot (16) - in particular by means of plastic deformation of the pole pot (16).

13. Electric motor (12) having a brush mount component (34) according to one of the preceding claims, **characterized in that** the screening plate (76) has two abutment surfaces (75) which are opposite one another and against which the spring tongues (74) rest under spring force in the mounted state.

14. Electric motor (12) having a brush mount component (34) according to one of the preceding claims,
**characterized in that** the screening plate (76) is of U-shaped design and, together with the earth contact plate (70) and an earth layer (29) of the printed circuit board (28), forms a metal screen which is closed over the entire circumference and extends, in particular, at least over the axial width (33) of the carbon brushes (32).

15. Method for producing an electric motor (12) according to one of Claims 7 to 14, having a brush mount component (34) according to one of Claims 1 to 6, in which method an armature shaft (14) with a commutator (30) and the brush mount component (34) are accommodated by a housing part (18, 20), **characterized by** the following assembly steps:
- a screening plate (76) is radially inserted into the housing part (20) and symmetrically connected to a pole housing (16)
- the armature shaft (14) with the commutator (30) mounted on it is inserted into the housing part (20)
- an earth contact plate (70) is fitted onto the brush mount component (34)
- the earth contact plate (70) is electrically contact-connected to the printed circuit board (28) and the brush mount component (34) is mechanically connected to a printed circuit board (28)
- the printed circuit board (28) with the brush mount component (34) is mounted in the housing part (20) in the radial direction (36), with the earth contact plate (70) being pressed against corresponding abutment surfaces (75) of the screening plate (76) by spring tongues (74) which are arranged symmetrically to the armature shaft (14)
- a housing cover is radially joined to the housing part (20).

16. Method according to Claim 15, **characterized in that** pins (46) of the earth contact plate (70) are soldered to the said earth contact plate before the printed circuit board (28) is installed - in particular in one operation with soldering of interference-suppression coils (66) and/or carbon brushes (32) which are arranged in the brush mount component (34).

## Revendications

1. Composant (34) porte-balais présentant des balais (32) en carbone, destiné à positionner les balais (32) en carbone par rapport à un commutateur (30) d'un moteur électrique (12) et comportant au moins un moyen de fixation (55) qui fixe le composant (34) porte-balais sur une carte de circuit (28), une tôle (70) de contact de masse configurée symétriquement par rapport à l'agencement des balais de carbone (32) étant disposée sur le composant (34) porte-balais,
**caractérisé en ce que**
la tôle (70) de contact de masse présente axialement une paroi frontale (71) dotée d'une découpe (69) pour un arbre d'induit (14) et deux ailes latérales coudées (73) qui entourent ensemble les balais (32) en carbone.

2. Composant (34) porte-balais selon la revendication 1, **caractérisé en ce qu'**une languette élastique (74) servant d'élément de contact est formée sur chacune des deux ailes latérales (73) opposées.

3. Composant (34) porte-balais selon l'une des revendications précédentes, **caractérisé en ce que** la tôle (70) de contact de masse présente des goujons (46) qui assurent le contact électrique avec la carte de circuit (28) et qui s'engagent à travers un trou (68) dans une surface de base (38) du composant (34) porte-balais.

4. Composant (34) porte-balais selon l'une des revendications précédentes, **caractérisé en ce que** la tôle (70) de contact de masse peut être enfichée directement en correspondance géométrique dans le composant (34) porte-balais.

5. Composant (34) porte-balais selon l'une des revendications précédentes, **caractérisé en ce que** les balais de carbone (32) sont configurés comme balais en marteau présentant des éléments de serrage (88) disposés sur des leviers élastiques (80) et aptes à être enfichés dans des logements (86) de balai du composant (34) porte-balais.

6. Composant (34) porte-balais selon l'une des revendications précédentes, **caractérisé en ce qu'**il est utilisé comme porte-système (62) pour d'autres composants (48), en particulier des bobines de déparasitage (66).

7. Moteur électrique (12) doté d'un composant (34) porte-balais selon l'une des revendications précédentes, **caractérisé en ce qu'**une carte de circuit (28) est disposée tangentiellement au commutateur (30) le long de la surface de fond (38) et **en ce que** le composant (34) porte-balais et la tôle (70) de contact de masse sont solidaires électriquement et mécaniquement de la carte de circuit (28).

8. Moteur électrique (12) doté d'un composant (34) porte-balais selon l'une des revendications précédentes, **caractérisé en ce que** les goujons (46) de la tôle (70) de contact de masse et en particulier les goujons (45) d'autres composants (48), par exemple des bobines de déparasitage (66) et/ou des balais (32) en forme de marteau, s'engagent par des trous (68, 41, 42) ménagés dans la surface de base (38) du composant (34) porte-balais dans des alésages correspondants (82) ménagés dans la carte de circuit (28) pour établir sur cette dernière un contact électrique de masse (67).

9. Moteur électrique (12) doté d'un composant (34) porte-balais selon l'une des revendications précédentes, **caractérisé en ce que** la tôle (70) de contact de masse est formée de deux parties distinctes identiques, en particulier des languettes élastiques (74), disposées symétriquement pour retenir les balais (32) en carbone.

10. Moteur électrique (12) doté d'un composant (34) porte-balais selon l'une des revendications précédentes, **caractérisé en ce que** les goujons (46) formés sur les languettes élastiques (74) sont reliés à la carte de circuit (28) en position aussi proche que possible des goujons (44) des balais (32) en carbone.

11. Moteur électrique (12) doté d'un composant (34) porte-balais selon l'une des revendications précédentes, **caractérisé en ce que** le moteur électrique (12) présente une cuvette polaire (16) sur laquelle est fixé un boîtier de transmission (18) et **en ce qu'**une tôle de blindage (76) configurée symétriquement par rapport à l'agencement des balais (32) de carbone est disposée dans le boîtier de transmission (18).

12. Moteur électrique (12) doté d'un composant (34) porte-balais selon l'une des revendications précédentes, **caractérisé en ce que** la tôle de blindage (76) présente au moins deux et de préférence trois bornes symétriques de raccordement de masse (77) fixées sur la cuvette polaire (16), en particulier par déformation plastique de la cuvette polaire (16).

13. Moteur électrique (12) doté d'un composant (34) porte-balais selon l'une des revendications précédentes, **caractérisé en ce que** la tôle de blindage (76) présente deux surfaces d'appui (75) mutuellement opposées sur lesquelles les languettes élastiques (74) reposent sous une force élastique à l'état monté.

14. Moteur électrique (12) doté d'un composant (34) porte-balais selon l'une des revendications précédentes, **caractérisé en ce que** la tôle de blindage (76) est configurée en U et forme avec la tôle (70) de contact de masse et une couche de masse (29) de la carte de circuit (28) un blindage métallique fermé qui englobe toute la périphérie et qui s'étend en particulier au moins sur la largeur axiale (33) des balais (32) de carbone.

15. Procédé de fabrication d'un moteur électrique (12) selon l'une des revendications 7 à 14 et présentant un composant (34) porte-balais selon l'une des revendications 1 à 6, dans lequel un arbre d'induit (14) doté d'un commutateur (30) et le composant (34) porte-balais sont logés dans une pièce de boîtier (18, 20),
**caractérisé par** les étapes de montage suivantes :
- une tôle de blindage (76) est insérée radialement dans la pièce de boîtier (20) et est reliée symétriquement à un boîtier polaire (16),
- l'arbre d'induit (14) sur lequel est monté le commutateur (30) est inséré dans la pièce de boîtier (20),
- une tôle (70) de contact de masse est enfichée sur le composant (34) porte-balais,
- la tôle (70) de contact de masse est mise en contact électrique avec la carte de circuit (28) et le composant (34) porte-balais est relié mécaniquement à une carte de circuit (28),
- la carte de circuit (28) munie du composant (34) porte-balais est montée dans la direction radiale (36) dans la pièce de boîtier (20) et la tôle (70) de contact de masse dotée de languettes élastiques (74) disposées symétriquement par rapport à l'arbre d'induit (14) est repoussée sur des surfaces de pose correspondantes (75) de la tôle de blindage (76) et
- un couvercle de boîtier est placé radialement sur la pièce de boîtier (20).

16. Procédé selon la revendication 15, **caractérisé en ce qu'**avant le montage de la carte de circuit (28), des goujons (46) de la tôle (70) de contact de masse sont brasés sur cette carte de circuit, en particulier en une opération conjointe avec le brasage de bobines de déparasitage (66) et/ou de balais (32) de carbone disposés dans le composant (34) porte-balais.
